# EUROPEAN PATENT APPLICATION

(11) **EP 4 554 162 A1**
(43) Date of publication of application: **14.05.2025**
(21) Application number: 24212715.7
(22) Date of filing: 13.11.2024
(51) Int. Cl.: H04L 41/0631, H04L 41/0686, H04L 41/069, H04L 41/147, H04L 43/0811, H04L 43/16, H04L 41/34

(54) **WIDE AREA NETWORK ISSUE PREDICTION BASED ON DETECTION OF SERVICE PROVIDER CONNECTION SWAPPING**

(30) Priority: 13.11.2023 US 202363598472 P; 11.11.2024 US 202418943614
(71) Applicant: Juniper Networks, Inc., Sunnyvale, CA 94089-1206 (US)
(72) Inventor: WU, Xiaoying, Sunnyvale, 94089 (US); NAGARKAR, Amruta Subhash, Sunnyvale, 94089 (US)
(74) Representative: D Young & Co LLP

(57) **Abstract**

Techniques are described for predicting a wide area network (WAN) issue based on detection of service provider connection swapping. A cloud-based network management system (NMS) obtains connection event data for one or more network access server (NAS) devices at a site, where each event included in the connection event data comprises a connection or disconnection event of a connection session provided by a service provider. The NMS detects a number of connection swaps in the connection event data over a time window, where a connection swap includes a change from a first connection session provided by a first service provider to a second connection session provided by a second service provider. Based on the detected number of connection swaps satisfying a threshold, the NMS predicts a root cause of the connection swaps as a WAN issue and generates a notification of the predicted root cause of the connection swaps.

## Description

This application claims the benefit of U.S. Patent Application No. 18/943,614, filed 11 November 2024, which claims the benefit of U.S. Provisional Patent Application No. 63/598,472, filed 13 November 2023, the entire content of which is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies.

Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless AP in order to access a wired network. In the case of a client device running a cloud-based application, such as voice over Internet Protocol (VOIP) applications, streaming video applications, gaming applications, or video conference applications, data is exchanged during an application session from the client device through one or more APs of a wireless network, one or more wired network devices, e.g., switches and/or routers, and one or more wide area network (WAN) devices, e.g., gateway routers, to reach the cloud-based application server.

### SUMMARY

The invention is defined by the appended claims. Various optional embodiments are set out in the dependent claims. In general, this disclosure describes one or more techniques for predicting a wide area network (WAN) issue based on detection of network access server (NAS) devices, e.g., access point (AP) devices, continuously swapping between connections provided by different service providers. In some examples, the disclosed concept leverages existing AP devices and WiFi-only data to infer or predict an upper layer WAN issue.

According to the disclosed techniques, a network management system (NMS), i.e., a cloud-based computing platform that manages wireless networks, obtains connection event data for one or more NAS devices at a site, where each event in the connection event data comprises a connection or disconnection event of a connection session provided by a service provider between a NAS device and the NMS. The NMS is configured to detect a number of connection swaps over a time window. A connection swap includes a change in the connection session from a first service provider to a second service provider. Based on the detected number of connection swaps satisfying a threshold, the NMS predicts that a root cause of the connection swaps is a WAN issue. The NMS then generates a notification of the predicted root cause of the connection swaps, e.g., for presentation to an administrator of the site.

The techniques of this disclosure provide one or more technical advantages and practical applications. NAS devices may experience connection session disconnection and connection events back and forth between two service providers due to issues at either the WAN or the service providers themselves. For WiFi-only sites, the NMS only has visibility into the wireless network based on the WiFi data collected from AP devices and does not have visibility into the wired network or WAN for those sites. As described herein, the techniques enable the NMS to distinguish between a WAN issue and a service provider issue as the root cause of the NAS devices continuously swapping between the service providers.

In one example, this disclosure is directed to an NMS comprising memory and one or more processors in communication with the memory. The NMS is configured to obtain connection event data for one or more NAS devices at a site, wherein each event included in the connection event data comprises a connection or disconnection event of a connection session provided by a service provider between a NAS device of the one or more NAS devices and the NMS. The NMS is further configured to detect a number of connection swaps in the connection event data over a time window, wherein a connection swap includes a change from a first connection session provided by a first service provider to a second connection session provided by a second service provider; based on the detected number of connection swaps satisfying a threshold, predict a root cause of the connection swaps as a WAN issue; and generate a notification of the predicted root cause of the connection swaps.

In another example, this disclosure is directed to a method comprising obtaining, by an NMS, connection event data for one or more NAS devices at a site, wherein each event included in the connection event data comprises a connection or disconnection event of a connection session provided by a service provider between a NAS device of the one or more NAS devices and the NMS. The method further comprises detecting, by the NMS, a number of connection swaps in the connection event data over a time window, wherein a connection swap includes a change from a first connection session provided by a first service provider to a second connection session provided by a second service provider; based on the detected number of connection swaps satisfying a threshold, predicting, by the NMS, a root cause of the connection swaps as a WAN issue; and generating, by the NMS, a notification of the predicted root cause of the connection swaps.

In a further example, this disclosure is directed to computer readable media comprising instructions that, when executed, cause one or more processors to obtain connection event data for one or more NAS devices at a site, wherein each event included in the connection event data comprises a connection or disconnection event of a connection session provided by a service provider between a NAS device of the one or more NAS devices and an NMS; detect a number of connection swaps in the connection event data over a time window, wherein a connection swap includes a change from a first connection session provided by a first service provider to a second connection session provided by a second service provider; based on the detected number of connection swaps satisfying a threshold, predict a root cause of the connection swaps as a WAN issue; and generate a notification of the predicted root cause of the connection swaps.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a network management system, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6 is a flow chart illustrating an example operation of the network management system, in accordance with one or more techniques of this disclosure.

### DETAILED DESCRIPTION

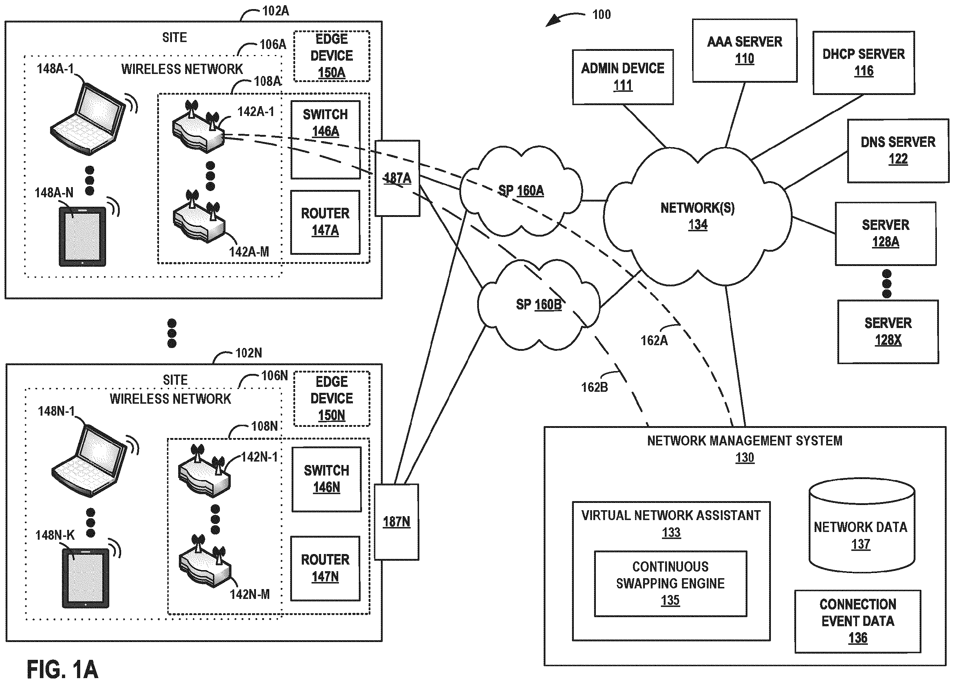

FIG. 1A is a block diagram of an example network system 100 including network management system (NMS) 130, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of client devices, otherwise known as user equipment devices (UEs), referred to generally as UEs or client devices 148, representing various wireless-enabled devices within each site. For example, a plurality of UEs 148A-1 through 148A-K are currently located at site 102A. Similarly, a plurality of UEs 148N-1 through 148N-K are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

Each site 102A-102N includes a plurality of network access server (NAS) devices 108A-108N, such as access points (APs) 142, switches 146, or routers 147. NAS devices 108 may include any network infrastructure devices capable of authenticating and authorizing client devices to access an enterprise network. For example, site 102A includes a plurality of APs 142A-1 through 142A-M. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site.

Each site 102A-102N also includes at least one of gateway devices 187. Each gateway device 187 is positioned at a boundary of its respective site 102 and configured to connect one or more networks at its respective site 102 to one or more networks(s) 134, e.g., the Internet and/or an enterprise intranet, via service provider networks ("SPs") 160. For example, site 102A includes a gateway device 187A that connects site 102A to SPs 160A, 160B to access network(s) 134. Similarly, site 102N includes a gateway device 187N that connects site 102A to SPs 160A, 160B to access network(s) 134. In some examples, gateway devices 187 may comprise router functionality to route traffic to and from NAS devices 108 through network(s) 134. Each of SPs 160 may comprise a different service provider network that includes equipment and telecommunication lines to access the Internet. As one example, SP 160A may comprise a broadband service provider that uses wired connection, such as fiber, cable, or telephone lines to connect gateway devices 187 to network(s) 134. As another example, SP 160B may comprise a long term evolution (LTE) service provider or 5G service provider that uses radio waves to connect gateway devices 187 to network(s) 134. In other examples SPs 160 may comprise other types of service providers that use wired, wireless, or cellular connections.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which one or more of APs 142A-1 through 142A-M at site 102A may be connected, and switch 146A may, in turn, be connected to a router 147A. Switch 146A and/or router 147A may be connected to gateway device 187A. Similarly, site 102N includes a switch 146N to which one or more of APs 142N-1 through 142N-M at site 102N may be connected, and switch 146N may, in turn, be connected to a router 147N. Switch 146N and/or router 147N may be connected to gateway device 187N. Although illustrated in FIG. 1A as if each site 102 includes a single switch 146 and a single router 147, in other examples, each site 102 may include more or fewer switches and/or routers. In addition, the APs and the other wired client-side devices of the given site may be connected to two or more switches and/or routers.

In some examples, interconnected switches and routers comprise wired local area networks (LANs) at sites 102 hosting wireless networks 106. Gateway devices 187 at sites 102 may connect the LANs to each other via one or more networks(s) 134, e.g., the Internet and/or an enterprise intranet. In addition, two or more switches at a site may be connected to each other and/or connected to two or more routers, and two or more routers may be connected to each other and/or connected to a gateway, which is connected to other gateways at other sites, e.g., via a mesh or partial mesh topology in a hub-and-spoke architecture, forming at least part of a wide area network (WAN).

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices 108, e.g., APs 142, switches 146, or routers 147, may connect to edge devices 150A-150N via physical cables, e.g., Ethernet cables. Edge devices 150 comprise cloud-managed, wireless LAN controllers. Each of edge devices 150 may comprise an on-premises device at a site 102 that is in communication with NMS 130 to extend certain microservices from NMS 130 to the on-premises NAS devices 108 while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, routers 147, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, switches 146, and routers 147 may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 obtains network data 137 for NAS devices 108A-108N at each site 102A-102N, respectively. Network data 137 may include event data, telemetry data, and/or other service level expectation (SLE)-related data. Network data 137 may include various parameters indicative of the performance and/or status of wireless networks 106A-106N. NMS 130 may obtain network data 137 via connection sessions, e.g., transmission control protocol (TCP) sessions, established with a plurality of NAS devices 108 at sites 102. The connection sessions between the NAS devices 108 and NMS 130 may be established as management paths. NAS devices 108 may establish other connection sessions as data paths to one or more cloud-based applications, application servers, and/or data centers. In some examples, a NAS device may use the same path to NMS 130 as both a management path and a data path.

The connection sessions between NAS devices 108 and NMS 130 may be provided by one or more service providers, e.g., SPs 160. The connection sessions may be established over the physical devices and cables, e.g., switches 146, routers 147, and gateway devices 187, that enable AP devices 142 to access network(s) 134 and, thus, NMS 130. In the illustrated example of FIG. 1A, AP 142A-1 at site 102A has a first connection session 162A with NMS 130 provided by first SP 160A, e.g., a broadband service provider, and a second connection session 162B with NMS 130 provided by second SP 160B, e.g., an LTE service provider. Only one of connection sessions 162A, 162B may be used or active at a time.

NMS 130 manages network resources, such as NAS devices 108 at each site, to deliver a high-quality wireless experience to end users, IoT devices and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In operation, NMS 130 observes, collects and/or receives network data 137, which may take the form of data extracted from messages, counters, and statistics, for example. In the example of FIG. 1A, NMS 130 also observes, collects and/or receives connection event data 136 for NAS devices 108. For each NAS device 108, connection event data 136 includes one or more connection events, e.g., connection or disconnection events, of a connection session between the NAS device and NMS 130 where the connection session is provided by a service provider. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network(s) 134 (e.g., routers, switches, controllers, gateways, and the like).

In accordance with one or more techniques of this disclosure, NMS 130 includes a continuous swapping engine 135 configured to predict a WAN issue based on detection of NAS devices 108 continuously swapping between connections provided by different service providers. In some examples, the disclosed concept leverages existing AP devices 142 and WiFi-only data to infer or predict an upper layer WAN issue.

According to the disclosed techniques, NMS 130 obtains connection event data 136 for NAS devices at a site, e.g., AP devices 142A at site 102A. Each event in connection event data 136 comprises a connection or disconnection event of a connection session provided by a service provider between a NAS device 108 and NMS 130, e.g., one of connection sessions 162A, 162B provided by SPs 160A, 160B, respectively, between AP 142A-1 and NMS 130. For example, AP 142A-1 may experience a connection swap during which a currently active connection session, e.g., first connection session 162A provided by first SP 160A, disconnects and another connection session, e.g., second connection session 162B provided by second SP 160B, connects as the active connection sessions with NMS 130. For each of the disconnect of first connection session 162A and the connect of second connection event 162B, AP 142A-1 collects and reports event data to NMS 130.

Continuous swapping engine 135 of NMS 130 is configured to detect a number of connection swaps experienced by the NAS devices at the site over a time window. For example, in some scenarios, AP 142A-1 may experience repeated connection swaps during which the connection with NMS 130 changes back-and-forth between first connection session 162A provided by SP 160A and second connection session 162B provided by SP 160B.

Based on the detected number of connection swaps satisfying a threshold, continuous swapping engine 135 of NMS 130 predicts that a root cause of the connection swaps is a WAN issue. For example, a relatively low number of connection swaps from first connection session 162A to second connection session 162B during the time window, e.g., less than three swaps within one hour, may be caused by issues with first SP 160A or issues with the underlying physical devices and cables associated with first connection session 162A. However, repeated connection swapping between first connection session 162A and second connection session 162B during the time window, e.g., three or more swaps within one hour, may be caused by issues with the underlying physical devices and cables associated with both connection sessions 162A, 162B, e.g., gateway device 187A or other devices in the WAN.

Continuous swapping engine 135 monitors connection swaps of connection sessions from the plurality of APs 142A and/or NAS devices 108A at site 102A that all use the same gateway device 187A to access the network(s) 134, e.g., the Internet, and NMS 130. For example, to predict the WAN issue, continuous swapping engine 352 may determine that all or a majority of the plurality of AP devices 142A at site 102A are experiencing continuous swapping of connection sessions between SPs 160. Based on the predicted WAN issue, continuous swapping engine 135 of NMS 130 generates a notification of the predicted root cause of the connection swaps. NMS 130 may transmit the notification for presentation to an administrator of the site, e.g., admin device 111.

The techniques of this disclosure provide one or more technical advantages and practical applications. NAS devices 108 may experience connection session disconnect and connect events between two service providers, e.g., SPs 160A, 160B, due to issues at either the WAN or the service providers themselves. For WiFi-only sites, the NMS only has visibility into the wireless network based on the WiFi data collected from AP devices and does not have visibility into the wired network or WAN for those sites. As described herein, the techniques enable NMS 130 to infer or predict a WAN issue, as opposed to a service provider issue, as the root cause of connection swapping between service providers based on WiFi-only data.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

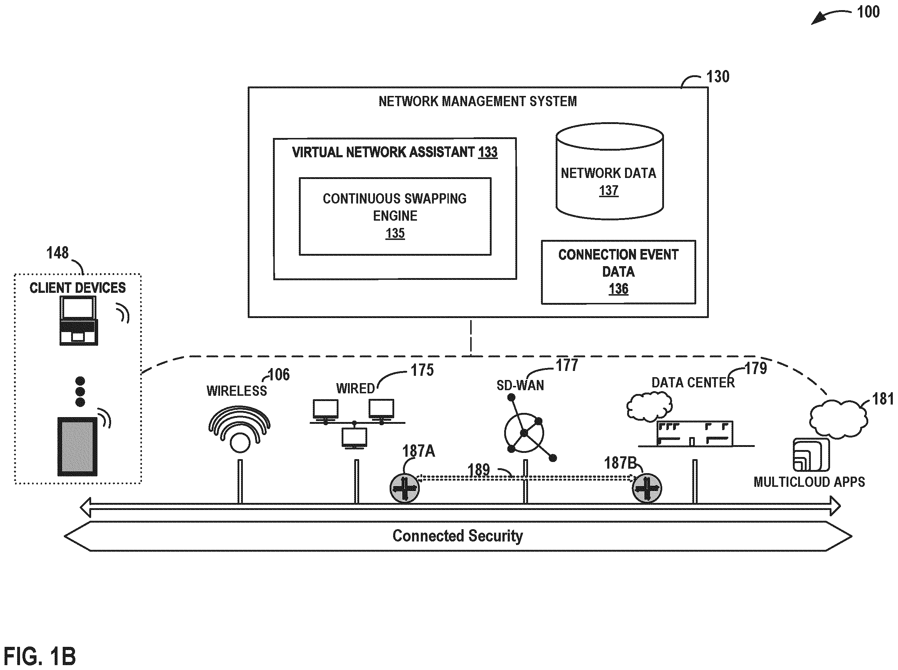

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., user devices 148 connected to wireless network 106 and wired LAN 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers or gateways 187A of wired networks 175 hosting wireless networks 106, such as branch or campus networks, to "hub" routers or gateways 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers or gateways 187A, 187B dynamically modify contents of original packet headers sourced by client devices 148 to steer traffic along selected paths, e.g., path 189, toward application services 181 without requiring use of tunnels and/or additional labels. In this way, routers or gateways 187A, 187B may be more efficient and scalable for large networks since the use of tunnel-less, session-based routing may enable routers or gateways 187A, 187B to achieve considerable network resources by obviating the need to perform encapsulation and decapsulation at tunnel endpoints. Moreover, in some examples, each router or gateway 187A, 187B may independently perform path selection and traffic engineering to control packet flows associated with each session without requiring use of a centralized SDN controller for path selection and label distribution. In some examples, routers or gateways 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

According to the disclosed techniques, NMS 130 obtains connection event data 136 for NAS devices at a site associated with a wireless network, e.g., wireless network 106, where each event in connection event data 136 comprises a connection or disconnection event of a connection session between a NAS device and NMS 130 provided by a service provider. Continuous swapping engine 135 of NMS 130 is configured to detect a number of connection swaps over a time window, where a connection swap includes a change in the connection session from a first service provider to a second service provider. Based on the detected number of connection swaps satisfying a threshold, continuous swapping engine 135 of NMS 130 predicts that a root cause of the connection swaps is a WAN issue and generates a notification of the predicted root cause of the connection swaps. In some examples, NMS 130 may only have visibility into wireless network 106. For example, NMS 130 may only obtain network data 137 for AP devices and/or client devices 148 of wireless network 106, and may not obtain network data from devices (e.g., switches, routers, and/or gateways) of wired network 175 or WAN 177. As described herein, the techniques enable NMS 130 to infer or predict an issue occurring within WAN 177, as opposed to a service provider issue, as the root cause of the NAS devices continuously swapping between the service providers based on WiFi-only data.

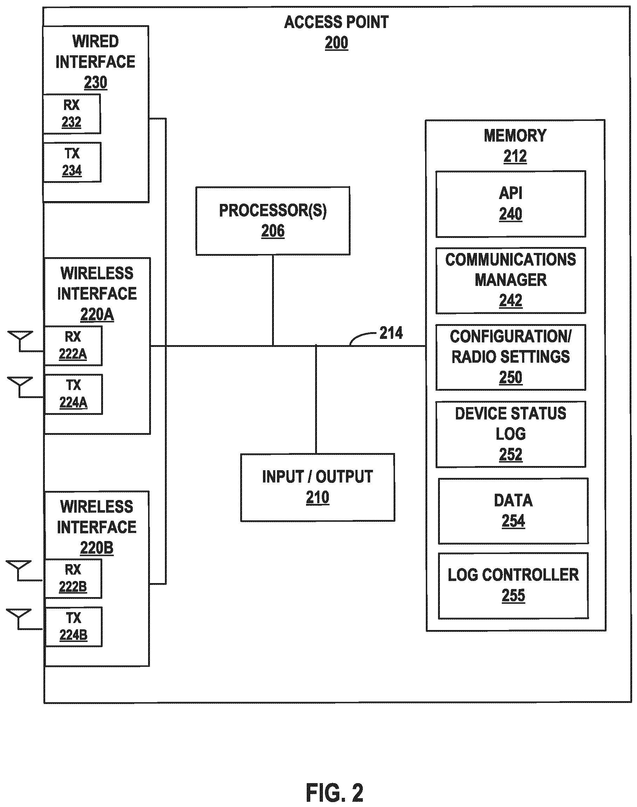

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as non-transitory computer-readable mediums including a storage device (e.g., a disk drive, or an optical drive) or a memory (such as Flash memory or RAM) or any other type of volatile or non-volatile memory, that stores instructions to cause the one or more processors 206 to perform the techniques described herein. Computer readable media may also include transient communication media. Such communication media may occur within a single computer system or between multiple computer systems, and may take the form of transient signal-conveying media such as carrier waves and transmission signals.

Memory 212 includes one or more devices configured to store programming modules and/or data associated with operation of access point 200. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may measure and report network data from device status log 252 and/or data 254 to NMS 130. The network data may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. AP device 200 may periodically create a package of the network data according to a periodic interval. The collected and sampled data periodically reported in the package of statistical data may be referred to herein as "oc-stats." In other examples, NMS 130 may request, retrieve, or otherwise receive the package of statistical data from AP device 200 via API 240, an open configuration protocol, or another of communication protocols. In still other examples, AP device 200 reports event data to NMS 130 in the cloud in response to the occurrence of certain events at AP device 200, such as connection and disconnection events of a connection session with NMS 130, as the events happen and/or NMS 130 may observe and record the events at AP device 200 as the events happen. The event-driven data may be referred to herein as "oc-events."

In accordance with the disclosed techniques, AP device 200 may have connection sessions, e.g., TCP connection sessions, with NMS 130 that are provided by one or more service providers. For example, AP device 200 may have an active first connection session with NMS 130 provided by a first service provider, e.g., a broadband service provider, and an inactive second connection session with NMS 130 provided by a second service provider, e.g., an LTE service provider.

AP device 200 may collect and/or report connection event data to NMS 130 either as part of the package of network data or as event-driven data. The connection event data comprises connection and/or disconnection events of connection sessions between AP device 200 and NMS 130. For example, AP device 200 may collect and/or report a first connection event of the first connection session upon establishment of the first connection session between AP device 200 and NMS 130. AP device 200 may experience a connection swap from the first connection session to the second connection session when the first connection session becomes unstable. For example, AP device 200 may collect and/or report a first disconnection event of the first connection session upon disconnect of the first connection session and a second connection event of the second connection session upon establishment of the second connection session between AP device 200 and NMS 130.

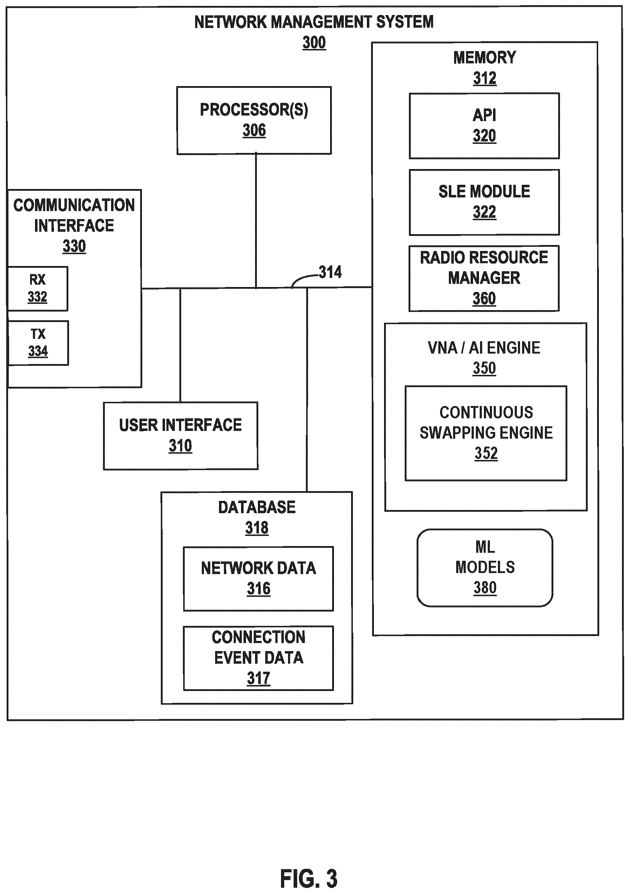

FIG. 3 is a block diagram of an example network management system (NMS) 300, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146, routers 147, gateway devices 187, and other network nodes within network(s) 134, which may be used to calculate one or more SLE metrics and/or update network data 316 in database 318. In the illustrated example of FIG. 3, NMS 300 receives and/or records connection event data 317 for NAS devices 108. For each NAS device, connection event data 317 includes one or more connection events, e.g., connection or disconnection events, of a connection session between the NAS device and NMS 300 where the connection session is provided by a service provider. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program, stored to a computer-readable storage medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. Computer readable media may also include transient communication media. Such communication media may occur within a single computer system or between multiple computer systems, and may take the form of transient signal-conveying media such as carrier waves and transmission signals.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client device APs 148, APs 142, switches 146, routers 147, gateway devices 187, or other network nodes used by NMS 300 to remotely monitor the performance of wireless networks 106A-106N and application sessions from client devices to cloud-based application servers. NMS 300 may further transmit data via communications interface 330 to any of network devices such as client devices 148, APs 142, switches 146, routers 147, gateway devices 187, other network nodes within network(s) 134, admin device 111 to remotely manage wireless networks 106A-106N and portions of the wired network and the WAN.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource management (RRM) engine 360. In accordance with the disclosed techniques, VNA/AI engine 350 includes continuous swapping engine 352 configured to predict a WAN issue based on detection of NAS devices continuously swapping between connection sessions provided by different service providers. NMS 300 may also include any other programmed modules, software engines and/or interfaces configured for remote monitoring and management of wireless networks 106A-106N and portions of the wired network, including remote monitoring and management of any of APs 142/200, switches 146, routers 147, or other network devices, e.g., gateway routers 187 of FIG. 1B.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1through142A-N collect SLE-related data from UEs 148A-1through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

In accordance with one or more techniques of this disclosure, continuous swapping engine 352 is configured to predict a WAN issue based on detection of NAS devices continuously swapping between connection sessions provided by different service providers. In some examples, the disclosed concept leverages existing NAS devices, e.g., AP devices, and WiFi-only data to infer or predict an upper layer WAN issue.

According to the disclosed techniques, NMS 300 obtains connection event data 317 for NAS devices at a site, where each event in connection event data 317 comprises a connection or disconnection event of a connection session between a NAS device and NMS 300 provided by a service provider. Continuous swapping engine 352 is configured to detect a number of connection swaps over a time window, e.g., one hour, thirty minutes, ten minutes, or the like. A connection swap includes a change in the connection session from a first service provider to a second service provider. Based on the detected number of connection swaps satisfying a threshold, e.g., three or more swaps within a one hour time window, continuous swapping engine 352 predicts that a root cause of the connection swaps is a WAN issue. Continuous swapping engine 352 then generates a notification of the predicted root cause of the connection swaps. The notification may be transmitted to an administrator computing device, e.g., admin device 111 from FIG. 1A, for presentation to an administrator of the site.

The disclosed concept is described herein with respect to AP devices but is also applicable for use with other types of NAS devices. AP devices for wireless networks at a site have connection sessions, e.g., TCP connections, with NMS 300 via one or more service providers. For a given site, there could be two SPs to provide Internet access, e.g., one Broadband and one LTE. In the example of FIG. 1A, AP 142A-1 of site 102A has an active first connection session 162A provided by SP 160A and an inactive second connection session 162B provided by SP 160B. NMS 300 receives and/or records connection/disconnection events of connection session as connection event data 317, the events include an indication of the service provider with which the connection session is established to NMS 300. For example, each event included in connection event data 317 may include an address, e.g., an Internet Protocol (IP) address, of the service provider that provided the connection session experiencing the reported event.

The AP devices may experience disconnect and connect event of connection sessions back-and-forth between the two SPs due to issues at either the WAN or the SPs themselves. For WiFi-only customer sites, NMS 300 only has visibility into the wireless network based on the WiFi data collected from the AP devices and does not have visibility into the wired network or WAN for those sites. In this scenario, NMS 300 conventionally has not been able to distinguish between a WAN issue or an SP issue as the root cause of continuous swapping between connection sessions provided by the different SPs.

Some solutions to the issue include using sensors in dedicated devices deployed to monitor the WAN. The disclosed concept, however, enables prediction of a WAN issue based on WiFi-only data collected from AP devices, without requiring dedicated devices to monitor the WAN or access to WAN-specific or SP-specific data sources. Instead, continuous swapping engine 352 of NMS 300 uses WiFi-only data collected from AP devices, i.e., connection event data 317, to infer an upper-layer WAN issue based on detection of continuous swapping between connection sessions provided by the different SPs.

The disclosed concept is directed to leveraging existing AP devices and WiFi-only data to infer a WAN issue based on continuous connection session swapping by the AP devices. The AP devices may experience continuous swapping between SPs when the connection sessions are not stable, which may be indicative of an issue with the WAN, e.g., gateway devices, as opposed to the SPs themselves. For example, if a gateway device is not configured properly, the gateway device itself may continuously swap between the SPs in an attempt to access the Internet. This continuous swapping by the gateway device is reflected in the connection session behavior experienced at the lower-level AP device.

In some examples, the AP devices may transmit reports to NMS 300 indicating connection/disconnection events of connection sessions with the SPs and, for each event, identifies the SP that provided the connection session. In other examples, NMS 300 itself observes and records the connection/disconnection events of the connection sessions between the AP devices and NMS 300. In either example, NMS 300 may store the connection/disconnection events as connection event data 317.

Continuous swapping engine 352 may detect connection swapping for a particular AP device based on corresponding events in connection event data 317 for the particular AP device. For example, to detect a connection swap, continuous swapping engine 352 may detect: (1) a connection event of a first connection session provided by a first SP between the particular AP device and NMS 300, (2) a disconnection event of the first connection session, (3) a connection event of a second connection session provided by a second SP between the particular AP device and NMS 300, and (4) a disconnection event of the second connection session. The disconnection event of the second connection session may then result in a subsequent connection event of the first connection session provided by the first SP, which restarts the connection swap cycle. Continuous swapping engine 352 may detect such connection swaps occurring continuously over a time window, e.g., one hour, thirty minutes, ten minutes, or the like, continuous swapping engine 352 may identify a pattern of continuous swapping based on connection event data 317 for the particular AP device.

In some examples, the AP device may use the same connection session for communicating with NMS 300 and to deliver real traffic to a client device from a cloud-based application, application server, and/or data center. In this example, the disclosed solution may be used to identify a root cause of issues with the connection for both a management path and a data path. In other examples, the AP device may use two different connections, one for the management path to connect to NMS 300 and another for the data path to deliver traffic. In this example, the disclosed solution may identify a root cause of issues with the connection to NMS 300, which may prevent transmission of configuration files from NMS 300 to the AP device.

In order to determine the occurrence of continuous swapping at an AP device, continuous swapping engine 352 of NMS 300 may look at WiFi-only data over a time window, e.g., hourly, to identify whether the connection sessions between the AP device and the NMS swapped between different SPs multiple times during the time window. Continuous swapping engine 352 may increment a counter each time the connection session changes for the AP device over the time window. Based on the counter satisfying a threshold, e.g., meeting or exceeding the threshold, during the time window, continuous swapping engine 352 detects continuous swapping of connection sessions for that AP device. In some examples, the threshold may be equal to one of three swaps, five swaps, ten swaps, or the like, and may vary based on the associated time window.

The raw data reported to and/or recorded by NMS 300 from the AP device indicates the connection/disconnection events of the connection sessions and, for each event, the IP address of the SP that provided the connection session. The IP address is provided by the SP. Based on the data from the AP device in connection event data 317, continuous swapping engine 352 performs a lookup (reverse lookup) of the IP address to identify the SP name and location. In some examples, continuous swapping engine 352 may use a third-party service to perform the reverse lookup of the IP address to identify the SP. Continuous swapping engine 352 then compares the IP address and/or SP name for each connection/disconnection event within the time window to detect a swapping event and increment the counter. In some examples, the location of the SP may be used to filter out situations where the AP site is located geographically far from NMS 300, such that the swapping may be a management path issue as opposed to a WAN issue.

Continuous swapping engine 352 may be configured to continuously look at the WiFi-only data for AP devices of a site included in connection event data 317 to identify instances of continuous swapping at APs of the site in accordance with the time window. In response to identification of continuous swapping by APs at the site, continuous swapping engine 352 may generate a notification indicating the inferred or predicted WAN issue. NMS 300 may send the notification via communication interface 330 to a network administrator for the site or the org, e.g., admin device 111 from FIG. 1A.

Although generally described in this disclosure as monitoring connection swaps of a single AP device, continuous swapping engine 352 monitors connection swaps of connection sessions from the plurality of APs and/or NAS devices at a given site that all use the same gateway device to access the Internet and NMS 300. For example, to predict the WAN issue, continuous swapping engine 352 may determine that all or a majority of the plurality of AP devices at a site are experiencing continuous swapping of connection sessions between service providers.

In further examples, continuous swapping engine 352 may take into consideration the universe of data observed, collected and/or record by NMS 300, including the type of APs experiencing continuous swapping, location of APs or of the site experiencing continuous swapping, a duration of the continuous swapping (e.g., one time window or over multiple consecutive time windows). In some cases, continuous swapping engine 352 may determine a severity associated with the detected connection swaps and modify the counter threshold for identifying continuous swapping within a time window based on the severity of the swapping or may apply another threshold that requires continuous swapping be detected over multiple consecutive time windows prior to generating the notification. The notification may include a recommendation to check the health of gateway devices, e.g., gateway devices 187 of FIGS. 1A, 1B, and other WAN health metrics.

In some examples, ML models 380 may comprise a supervised ML model that is trained, using training data comprising pre-collected, labeled network data received from network devices (e.g., client devices, APs, switches and/or other network nodes), to detect the AP continuous swapping between SPs. The supervised ML model may comprise one of a logistical regression, naive Bayesian, support vector machine (SVM), or the like. In other examples, ML models 380 may comprise an unsupervised ML model. Although not shown in FIG. 3, in some examples, database 318 may store the training data and VNA/AI engine 350 or a dedicated training module may be configured to train ML model 380 based on the training data to determine appropriate weights across the one or more features of the training data.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

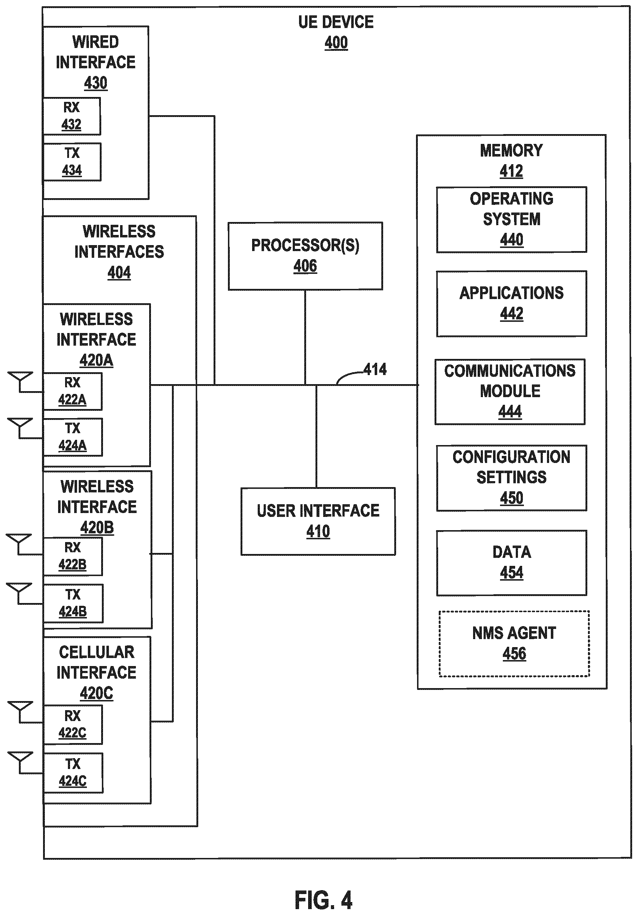

FIG. 4 shows an example user equipment (UE) device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, stored to a computer-readable storage medium (such as memory 412), such as non-transitory computer-readable mediums including a storage device (e.g., a disk drive, or an optical drive) or a memory (such as Flash memory or RAM) or any other type of volatile or non-volatile memory, that stores instructions to cause the one or more processors 406 to perform the techniques described herein. Computer readable media may also include transient communication media. Such communication media may occur within a single computer system or between multiple computer systems, and may take the form of transient signal-conveying media such as carrier waves and transmission signals.

Memory 412 includes one or more devices configured to store programming modules and/or data associated with operation of UE 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage 454. Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data storage 454 may include, for example, a status/error log including a list of events specific to UE 400. The events may include a log of both normal events and error events according to a logging level based on instructions from NMS 130. Data storage 454 may store any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130.

As described herein, UE 400 may measure and report network data from data storage 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 137 (FIG. 1A) based on the SLE-related data received from the UEs or client devices in the wireless network.

Optionally, UE device 400 may include an NMS agent 456. NMS agent 456 is a software agent of NMS 130 that is installed on UE 400. In some examples, NMS agent 456 can be implemented as a software application running on UE 400. NMS agent 456 collects information including detailed client-device properties from UE 400, including insight into UE 400 roaming behaviors. The information provides insight into client roaming algorithms, because roaming is a client device decision. In some examples, NMS agent 456 may display the client-device properties on UE 400. NMS agent 456 sends the client device properties to NMS 130, via an AP device to which UE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of UE 400 also collects information about which APs the UE 400 connected with, which also indicates which APs the UE 400 did not connect with. NMS agent 456 of UE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of UE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

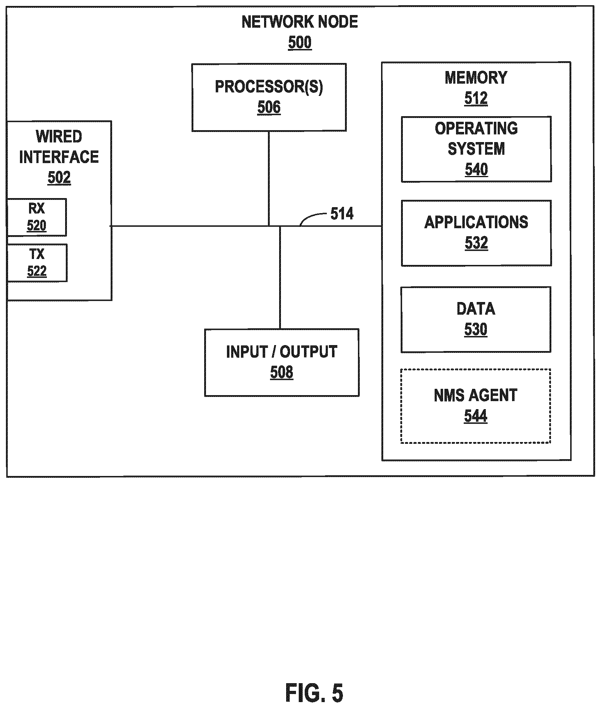

FIG. 5 is a block diagram illustrating an example network node 500, in accordance with one or more techniques of this disclosure. In one or more examples, the network node 500 implements a device or a server attached to the network 134 of FIG. 1A, e.g., switches 146, AAA server 110, DHCP server 116, DNS server 122, web servers 128, etc., or another network device supporting one or more of wireless network 106, wired LAN 175, or SD-WAN 177, or data center 179 of FIG. 1B, e.g., routers 187.

In this example, network node 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540 and data/information 530. Data 530 may include a system log and/or an error log that stores event data, including behavior data, for network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., registration request, AAA services, DHCP requests, Simple Notification Service (SNS) look-ups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router or gateway 187 of FIGS. 1A, 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router or gateway 187A of FIGS. 1A, 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or another module running on network node 500.

The data collected and reported by network node 500 may include periodically reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer.

In some examples, network node 500 optionally includes an NMS agent 544. NMS agent 544 may periodically create a package of the statistical data according to a second periodic interval, e.g., every 3 minutes. The collected and sampled data periodically reported in the package of statistical data may be referred to herein as "oc-stats." In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen and/or NMS 130 may observe and record the events at network node 500 as the events happen. The event-driven data may be referred to herein as "oc-events."

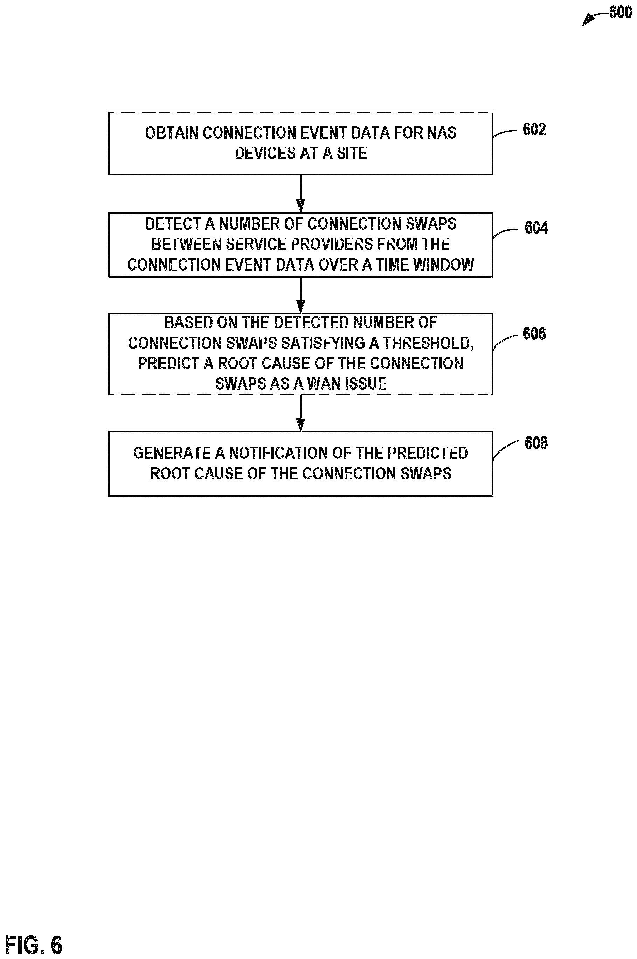

FIG. 6 is a flow chart illustrating an example operation of the network management system, in accordance with one or more techniques of this disclosure. The example operation is described herein with respect to NMS 130 and AP devices 142 from FIG. 1A.

NMS 130 obtains connection event data for one or more AP devices 142A at a site 106A, wherein each event included in the connection event data comprises a connection or disconnection event of a connection session, e.g., connection session 162A, 162B between AP 142A-1 and NMS 130 provided by a service provider 160A, 160B, respectively (602). The connection session 162A, 162B may comprise a TCP connection session for a management path between AP 142A-1 at site 102A and NMS 130. In some examples, a data path between AP 142A-1 at the site and one or more of cloud-based applications, application servers, and/or data centers comprises a same path as the management path.

To obtain the connection event data, NMS 130 is configured to one of read the connection event data for AP devices 142A at site 102A from records created by NMS 130 or receive the connection event data reported by AP devices 142A at site 102A. In some cases, NMS 130 determines a physical distance between a site 102N and NMS 130 and filters out the connection event data from AP devices 142N at site 102N site when the physical distance exceeds a preset distance.

NMS 130 detects a number of connection swaps in the connection event data over a time window, wherein a connection swap includes a change from connection session 162A provided by first SP 160A to connection session 162B provided by second SP 160B (604). First SP 160A may provide a first connection type, e.g., broadband, and second SP 160B may provide a second connection type, e.g., LTE, that is different than the first connection type. Each event included in the connection event data may include an address of the SP 160A, 160B that provided the connection session experiencing the connection or disconnection event. For each event included in the connection event data, NMS 130 performs a reverse lookup of the address of the SP included in the event to determine a name and a location of the SP that provided the connection session experiencing the connection or disconnection event.

To detect a connection swap including the change from first connection session 162A provided by first SP 160A to second connection sessions 162B provided by second SP 160B based on the connection event data, NMS 130 is configured to detect a first event comprising a connection event of first connection session 162A provided by first SP 160A between AP 142A-1 and NMS 130, detect a second event comprising a disconnection event of first connection session 162A, detect a third event comprising a connection event of second connection session 162B provided by second SP 160B between AP 142A-1 and NMS 130, and detect a fourth event comprising a disconnection event of second connection session 162B. To detect the number of connection swaps in the connection event data over the time window, NMS 130 is configured to increment a counter for each connection swap of AP 142A-1 between the first service provider 160A and the second service provider 160B that occurs during the time window. The time window comprises a rolling time window.

Based on the detected number of connection swaps satisfying the threshold, NMS 130 predicts a root cause of the connection swaps as a WAN issue (606). After each increment of the counter, NMS 130 determines whether a current number of connection swaps satisfies the threshold. In some examples, NMS 130 may determine a severity associated with the detected number of connection swaps that satisfy the threshold in either a single time window or for each of two or more consecutive time windows, and modify the threshold based on the severity of the detected number of connection swaps.

NMS 130 generates a notification of the predicted root cause of the connection swaps (608). In some examples, the notification may be transmitted to an administrator computing device, such as admin device 111, for presentation to an administrator of the site. The notification of the predicted root cause of the connection swaps may include a recommendation to determine at least one of WAN health metrics or health metrics of one or more gateway devices of the WAN.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache). Computer readable media may also include transient communication media. Such communication media may occur within a single computer system or between multiple computer systems, and may take the form of transient signal-conveying media such as carrier waves and transmission signals.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Thus, from one perspective, there has now been described techniques for predicting a wide area network (WAN) issue based on detection of service provider connection swapping. A cloud-based network management system (NMS) obtains connection event data for one or more network access server (NAS) devices at a site, where each event included in the connection event data comprises a connection or disconnection event of a connection session provided by a service provider. The NMS detects a number of connection swaps in the connection event data over a time window, where a connection swap includes a change from a first connection session provided by a first service provider to a second connection session provided by a second service provider. Based on the detected number of connection swaps satisfying a threshold, the NMS predicts a root cause of the connection swaps as a WAN issue and generates a notification of the predicted root cause of the connection swaps.

Further examples of the present disclosure set out in the following numbered clauses:
1. A network management system (NMS) comprising:
   memory; and
   one or more processors in communication with the memory and configured to:
      obtain connection event data for one or more network access servers (NAS) devices at a site, wherein each event included in the connection event data comprises a connection or disconnection event of a connection session provided by a service provider between a NAS device of the one or more NAS devices and the NMS;
      detect a number of connection swaps in the connection event data over a time window, wherein a connection swap includes a change from a first connection session provided by a first service provider to a second connection session provided by a second service provider;
      based on the detected number of connection swaps satisfying a threshold, predict a root cause of the connection swaps as a wide area network (WAN) issue; and
      generate a notification of the predicted root cause of the connection swaps.
2. The NMS of any preceding clause, wherein each event included in the connection event data includes an address of the service provider that provided the connection session experiencing the connection or disconnection event, and wherein the one or more processors are configured to, for each event included in the connection event data, perform a reverse lookup of the address of the service provider included in the event to determine a name and a location of the service provider that provided the connection session.
3. The NMS of any preceding clause, wherein the first service provider provides a first connection type and the second service provider provides a second connection type that is different than the first connection type.
4. The NMS of any preceding clause, wherein to obtain the connection event data, the one or more processors are configured to one of read the connection event data for the one or more NAS devices at the site from records created by the NMS or receive the connection event data reported by the one or more NAS devices at the site.
5. The NMS of any preceding clause, wherein to detect the connection swap, the one or more processors are configured to:
   detect a first event comprising a connection event of the first connection session provided by the first service provider between the NAS device and the NMS;
   detect a second event comprising a disconnection event of the first connection session;
   detect a third event comprising a connection event of the second connection session provided by the second service provider between the NAS device and the NMS; and
   detect a fourth event identifying a disconnection event of the second connection session.
6. The NMS of any preceding clause, wherein to detect the number of connection swaps in the connection event data over the time window, the one or more processors are configured to increment a counter for each connection swap of the NAS device between the first service provider and the second service provider that occurs during the time window.
7. The NMS of clause 6, wherein the one or more processors are configured to, after each increment of the counter, determine whether a current number of connection swaps satisfies the threshold.
8. The NMS of any preceding clause, wherein the one or more processors are configured to:
   determine a severity associated with the detected number of connection swaps that satisfy the threshold in either a single time window or for each of two or more consecutive time windows; and
   modify the threshold based on the severity of the detected number of connection swaps.
9. The NMS of any preceding clause, wherein each of the first connection session and the second connection session comprises a transmission control protocol (TCP) connection session for a management path between the NAS device at the site and the NMS.
10. The NMS of clause 9, wherein a data path between the NAS device at the site and one or more of cloud-based applications, application servers, or data centers comprises a same path as the management path.
11. The NMS of any preceding clause, wherein the time window comprises a rolling time window.
12. The NMS of any preceding clause, wherein the notification of the predicted root cause of the connection swaps includes a recommendation to determine at least one of WAN health metrics or health metrics of one or more gateway devices of the WAN.
13. The NMS of any preceding clause, wherein the one or more processors are configured to:
   determine a physical distance between the site and the NMS; and
   filter out the connection event data for the one or more NAS devices at the site when the physical distance exceeds a preset distance.
14. A method comprising:
   obtaining, by a network management system (NMS), connection event data for one or more network access servers (NAS) devices at a site, wherein each event included in the connection event data comprises a connection or disconnection event of a connection session provided by a service provider between a NAS device of the one or more NAS devices and the NMS;
   detecting, by the NMS, a number of connection swaps in the connection event data over a time window, wherein a connection swap includes a change from a first connection session provided by a first service provider to a second connection session provided by a second service provider;
   based on the detected number of connection swaps satisfying a threshold, predicting, by the NMS, a root cause of the connection swaps as a wide area network (WAN) issue; and
   generating, by the NMS, a notification of the predicted root cause of the connection swaps.
15. The method of clause 14, wherein each event included in the connection event data includes an address of the service provider that provided the connection session experiencing the connection or disconnection event, and wherein the method further comprises, for each event included in the connection event data, performing a reverse lookup of the address of the service provider included in the event to determine a name and a location of the service provider that provided the connection session.
16. The method of clause 14 or clause 15, wherein detecting the connection swap comprises:
   detecting a first event comprising a connection event of the first connection session provided by the first service provider between the NAS device and the NMS;
   detecting a second event comprising a disconnection event of the first connection session;
   detecting a third event comprising a connection event of the second connection session provided by the second service provider between the NAS device and the NMS; and
   detecting a fourth event identifying a disconnection event of the second connection session.
17. The method of any of clauses 14-16, wherein detecting the number of connection swaps in the connection event data over the time window comprises incrementing a counter for each connection swap of the NAS device between the first service provider and the second service provider that occurs during the time window.
18. The method of any of clauses 14-17, further comprising:
   determining a severity associated with the detected number of connection swaps that satisfy the threshold in either a single time window or for each of two or more consecutive time windows; and
   modifying the threshold based on the severity of the detected number of connection swaps.
19. The method of any of clauses 14-19, further comprising:
   determining a physical distance between the site and the NMS; and
   filtering out the connection event data for the one or more NAS devices at the site when the physical distance exceeds a preset distance.
20. Non-transitory computer readable storage media comprising instructions that, when executed, cause one or more processors to:
   obtain connection event data for one or more network access servers (NAS) devices at a site, wherein each event included in the connection event data comprises a connection or disconnection event of a connection session provided by a service provider between a NAS device of the one or more NAS devices and a network management system (NMS);
   detect a number of connection swaps in the connection event data over a time window, wherein a connection swap includes a change from a first connection session provided by a first service provider to a second connection session provided by a second service provider;
   based on the detected number of connection swaps satisfying a threshold, predict a root cause of the connection swaps as a wide area network (WAN) issue; and
   generate a notification of the predicted root cause of the connection swaps.

## Claims

1. A network management system, NMS, comprising:
memory; and
one or more processors in communication with the memory and configured to:
obtain connection event data for one or more network access servers, NAS, devices at a site, wherein each event included in the connection event data comprises a connection or disconnection event of a connection session provided by a service provider between a NAS device of the one or more NAS devices and the NMS;
detect a number of connection swaps in the connection event data over a time window, wherein a connection swap includes a change from a first connection session provided by a first service provider to a second connection session provided by a second service provider;
based on the detected number of connection swaps satisfying a threshold, predict a root cause of the connection swaps as a wide area network issue; and
generate a notification of the predicted root cause of the connection swaps.

2. The NMS of claim 1, wherein each event included in the connection event data includes an address of the service provider that provided the connection session experiencing the connection or disconnection event, and wherein the one or more processors are configured to, for each event included in the connection event data, perform a reverse lookup of the address of the service provider included in the event to determine a name and a location of the service provider that provided the connection session.

3. The NMS of any of claims 1-2, wherein the first service provider provides a first connection type and the second service provider provides a second connection type that is different than the first connection type.

4. The NMS of any of claims 1-3, wherein to obtain the connection event data, the one or more processors are configured to one of read the connection event data for the one or more NAS devices at the site from records created by the NMS or receive the connection event data reported by the one or more NAS devices at the site.

5. The NMS of any of claims 1-4, wherein to detect the connection swap, the one or more processors are configured to:
detect a first event comprising a connection event of the first connection session provided by the first service provider between the NAS device and the NMS;
detect a second event comprising a disconnection event of the first connection session;
detect a third event comprising a connection event of the second connection session provided by the second service provider between the NAS device and the NMS; and
detect a fourth event identifying a disconnection event of the second connection session.

6. The NMS of any of claims 1-5, wherein to detect the number of connection swaps in the connection event data over the time window, the one or more processors are configured to increment a counter for each connection swap of the NAS device between the first service provider and the second service provider that occurs during the time window.

7. The NMS of claim 6, wherein the one or more processors are configured to, after each increment of the counter, determine whether a current number of connection swaps satisfies the threshold.

8. The NMS of any of claims 1-7, wherein the one or more processors are configured to:
determine a severity associated with the detected number of connection swaps that satisfy the threshold in either a single time window or for each of two or more consecutive time windows; and
modify the threshold based on the severity of the detected number of connection swaps.

9. The NMS of any of claims 1-8, wherein each of the first connection session and the second connection session comprises a transmission control protocol connection session for a management path between the NAS device at the site and the NMS.

10. The NMS of claim 9, wherein a data path between the NAS device at the site and one or more of cloud-based applications, application servers, or data centers comprises a same path as the management path.

11. The NMS of any of claims 1-10, wherein the notification of the predicted root cause of the connection swaps includes a recommendation to determine at least one of WAN health metrics or health metrics of one or more gateway devices of the WAN.

12. The NMS of any of claims 1-11, wherein the one or more processors are configured to:
determine a physical distance between the site and the NMS; and
filter out the connection event data for the one or more NAS devices at the site when the physical distance exceeds a preset distance.

13. A method comprising:
obtaining, by a network management system, NMS, connection event data for one or more network access servers, NAS, devices at a site, wherein each event included in the connection event data comprises a connection or disconnection event of a connection session provided by a service provider between a NAS device of the one or more NAS devices and the NMS;
detecting, by the NMS, a number of connection swaps in the connection event data over a time window, wherein a connection swap includes a change from a first connection session provided by a first service provider to a second connection session provided by a second service provider;
based on the detected number of connection swaps satisfying a threshold, predicting, by the NMS, a root cause of the connection swaps as a wide area network issue; and
generating, by the NMS, a notification of the predicted root cause of the connection swaps.

14. The method of claim 13, further comprising steps corresponding to the functionality recited in any of claims 2-12.

15. Computer readable media comprising instructions that, when executed by one or more programmable processors, cause the one or more programmable processors to perform the method recited by any of claims 13-14.
